# EUROPEAN PATENT APPLICATION

(11) **EP 2 853 324 A2**
(43) Date of publication of application: **01.04.2015**
(21) Application number: 14186346.4
(22) Date of filing: 25.09.2014
(51) Int. Cl.: B22F 3/22, B22F 3/24

(54) **Method of creating a surface texture**

(30) Priority: 27.09.2013 US 201314039336
(71) Applicant: Pratt & Whitney Canada Corp., Longueuil, Québec J4G 1A1 (CA)
(72) Inventor: Scalzo, Orlando, Longueuil, Québec J4G 1A1 (CA); Poitras, Guillaume, Longueuil, Québec J4G 1A1 (CA); Campomanes, Marc, Longueuil, Québec J4G 1A1 (CA)
(74) Representative: Leckey, David Herbert

(57) **Abstract**

A method of creating a texture on at least one surface of a part is disclosed. The part is molded from a feedstock including a powder remaining solid during molding and a binder, and solidified. Then, a physical state of the binder is changed in only a predetermined portion of each surface of the part to be textured. The texture is then created from the predetermined portion by debinding and sintering the part.

## Description

### TECHNICAL FIELD

The application relates generally to the creation of a surface texture in a part and, more particularly, to the creation of surface texture in parts manufactured by a powder injection molding process.

### BACKGROUND OF THE ART

Cooling features such as pins or fins are often used in various types of parts, for example in shroud segments or heat shields of gas turbine engines, to help lower the surface temperature of the parts. However, such features may be difficult to machine in a part, particularly when the part is manufactured from hard alloys. Accordingly, it has been known to mold the cooling features with the part. However, the molding process may be limited as to the size of the features it can produce, including cooling features or similar texture in a surface. In addition, depending on their location, creating the features through molding may not always be possible.

### SUMMARY

In one aspect, there is provided a method of creating a texture on at least one surface of a part, the method comprising: a) providing a solid green part made from a feedstock including powder and a binder; b) after step a), changing a physical state of the binder in only a predetermined portion of each of the at least one surface of the part and; c) after step b), defining the texture from the predetermined portion by debinding and sintering the part.

In another aspect, there is provided a method of creating a texture on at least one surface of a part, the method comprising: a) molding the part from a feedstock including a powder remaining solid during molding and a binder, including solidifying the molded part; b) after step a), changing a physical state of the binder in only a predetermined portion of each of the at least one surface of the part; and c) after step b), defining the texture from the predetermined portion by debinding and sintering the part.

In another aspect, there is provided a method of creating a texture on a part, the method comprising: providing a solid green part made from a feedstock including a binder; melting or vaporizing the binder in only a predetermined portion of at least one surface of the green part while the binder in a remainder of the green part remains solid; and after the binder is melted or vaporized in the predetermined portion, debinding and sintering the part, the predetermined portion after debinding and sintering defining the texture on the at least one surface.

### DESCRIPTION OF THE DRAWINGS

Reference is now made to the accompanying figures in which:
Fig. 1 is a schematic cross-sectional view of a gas turbine engine;
Fig. 2 is a schematic tridimensional view of a shroud segment in accordance with a particular embodiment, which may be used in an engine such as shown in Fig. 1;
Fig. 3 is a schematic tridimensional view of an element showing a surface texture in accordance with a particular embodiment, which may be applied to the shroud segment of Fig. 2;
Fig. 4 is a schematic tridimensional view of an element showing a surface texture in accordance with a particular embodiment, which may be applied to the shroud segment of Fig. 2;
Fig. 5 is a cross-sectional view of the element of Fig. 4; and
Fig. 6 is a flow chart of a method of creating a surface texture in a part, in accordance with a particular embodiment.

### DETAILED DESCRIPTION

There is described herein a method of creating a surface texture on a part, particularly a part formed through a powder injection molding process, which in a particular embodiment is a metal injection molding process (MIM). The texture is created by acting on the binder of the green part. An exemplary part is provided herein as a component of a gas turbine engine.

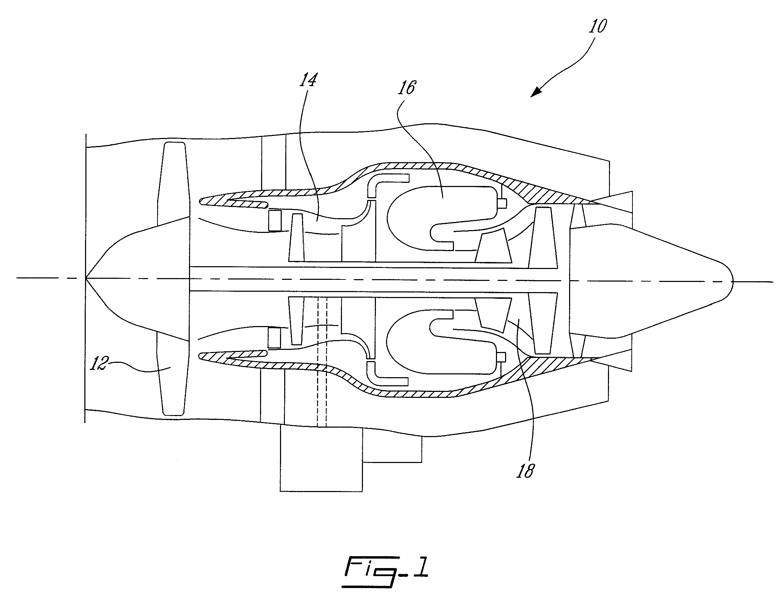

Fig.1 illustrates a gas turbine engine 10 of a type preferably provided for use in subsonic flight, generally comprising in serial flow communication a fan 12 through which ambient air is propelled, a compressor section 14 for pressurizing the air, a combustor 16 in which the compressed air is mixed with fuel and ignited for generating an annular stream of hot combustion gases, and a turbine section 18 for extracting energy from the combustion gases.

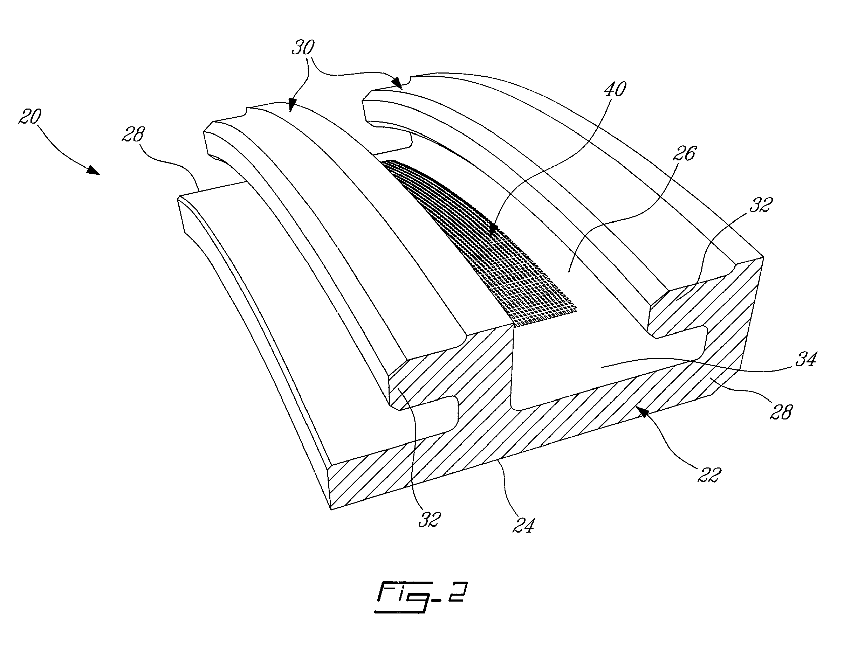

In a particular embodiment, and referring to Fig. 2, the part on which a textured surface is provided is a shroud segment 20 of a gas turbine engine such as that shown in Fig. 1. The shroud segment 20 is one of a plurality of similar or identical circumferentially adjoining shroud segments together defining a stationary annular turbine shroud concentrically arranged around the periphery of the blade tips of a turbine rotor of a high pressure stage of the turbine section 18. The turbine shroud defines a portion of the radially outer boundary of the engine gas path. In a particular embodiment, each shroud segment 20 is individually supported and located within the engine 10 by an outer housing support structure so as to collectively form a continuous shroud ring about the turbine blades.

The shroud segment 20 includes an arcuate platform 22 having an inner gas path surface 24 which is adapted to be exposed to the hot combustion gases during engine operation and an opposed outer cold surface 26. The platform 22 extends between circumferentially opposed ends 28 which mate with the circumferential end of the abutting shroud segments to form the shroud. Axially spaced-apart front and rear legs 30 extend radially outwardly from the outer surface 26 of the platform 22. The legs 30 are each provided with a respective axially projecting hook or rail portion 32 for engagement with corresponding mounting flange projections of the surrounding support structure in the engine. When assembled in the engine, a shroud plenum 34 is defined between the legs 30 and between the outer surface 26 of the platform 22 and the support structure, for receiving cooling air from a cooling air source, for example bleed air from the compressor 14.

Although not shown, various recesses or slots may be defined in the shroud segment 20, for example for receiving sealing members therein, including, but not limited to, radially extending slots in the legs 30, in the side of the legs facing the plenum 34, and/or in the circumferential ends 28 of the platform. Other features may be provided in the shroud segment 20, including, but not limited to, cooling holes, angular timing features, clamping pockets, and platforms.

In the embodiment shown, a portion of the outer surface 26 of the platform 22 is provided with a surface texture 40, which in a particular embodiment increases its surface area and accordingly its heat transfer properties to increase cooling.

It is understood that the shroud segment 20 shown herein is an exemplary embodiment and that the part may alternately be any other component requiring a surface texture 40 and which may be manufactured from a powder injection molding process or any other process creating an intermediary green part, i.e. a part including a solidified binder that holds a material powder together with the binder being removed before the part is in its final form. For example, the part may be a heat shield of the gas turbine engine 10, used for example to protect a portion of a wall of the combustor 16. In a particular embodiment, the increase of surface area caused by the presence of the texture on the surface of the part may allow for increased heat transfer properties, increased abradability, reduced friction, improved lubrication, and/or improved aerodynamic properties.

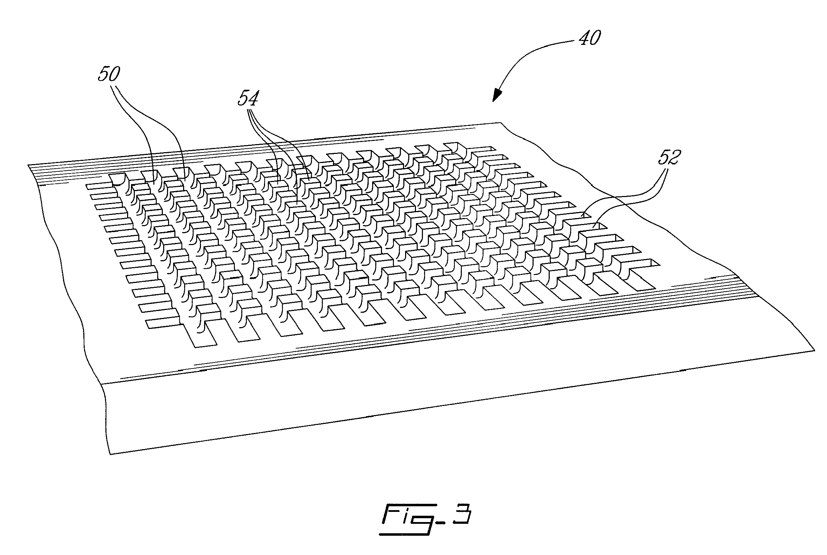

Referring to Fig. 3, a surface texture 40, which can be applied for example to the outer surface 26 of the platform 22 or to any other adequate type of part, is shown. The surface texture 40 is formed by a first set of regularly spaced apart linear grooves 50, which extend e.g. along the circumferential direction of the platform, and a second set of regularly spaced apart linear grooves 52, which extend e.g. along the axial direction of the platform, and which intersect the grooves 50 of the first set in a perpendicular manner. Together, the two sets of grooves 50, 52 thus define a series of pins 54 extending therebetween in a grid-type pattern.

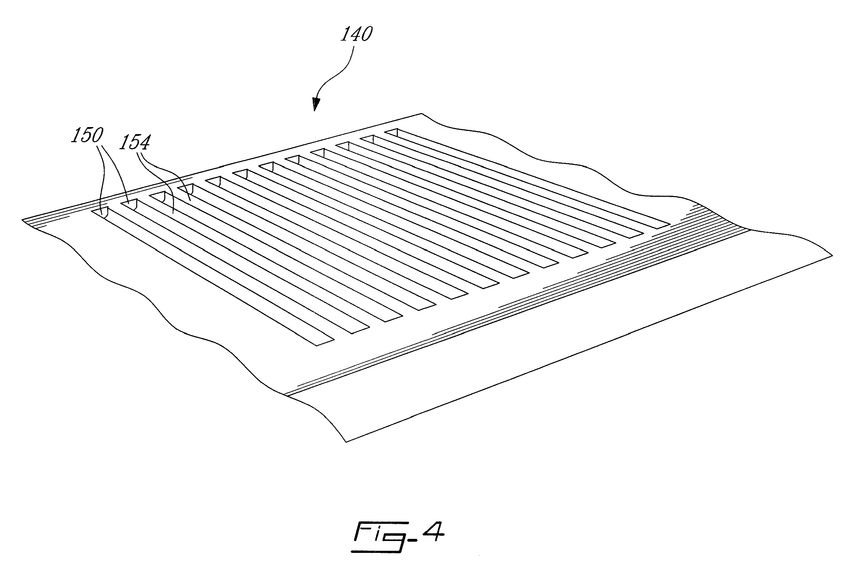

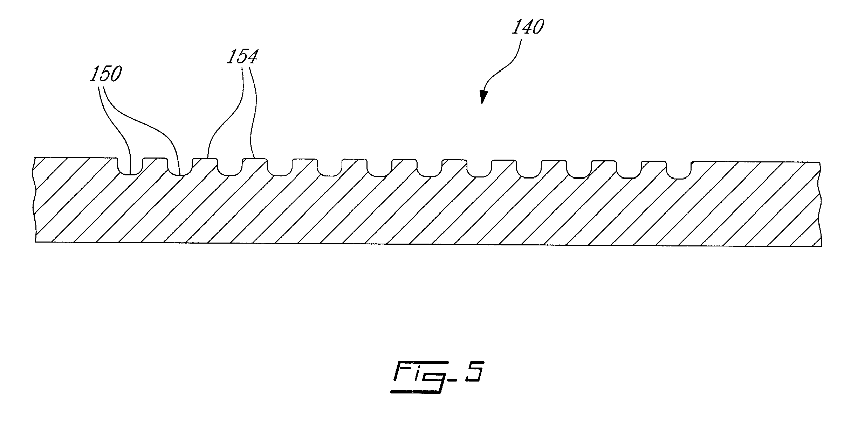

Referring to Figs. 4-5, an alternate exemplary surface texture 140, which can be applied for example to the outer surface 26 of the platform 22 or to any other adequate type of part, is shown. In this embodiment, the surface texture 140 is defined by a single set of regularly spaced apart linear grooves 150, which extend e.g. along the circumferential direction of the platform. A series of regularly spaced-apart linear fins 154 is thus defined between the grooves 150.

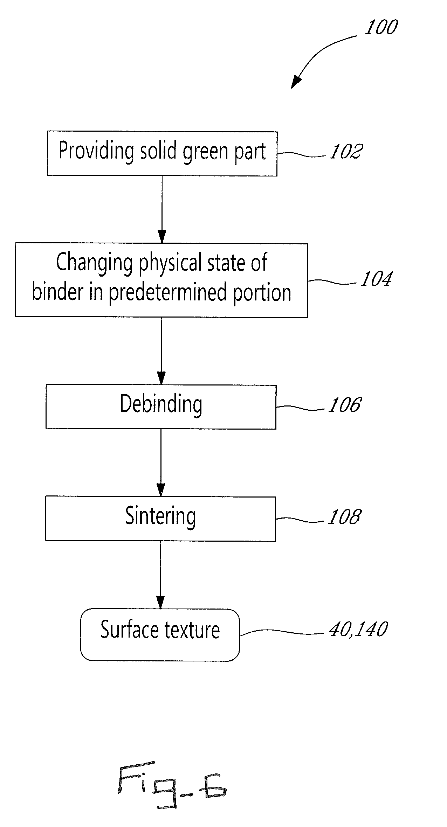

Referring to Fig. 6, in a particular embodiment, the surface texture 40, 140 of the part is created in accordance with the following method 100. As shown in step 102, a green part is first provided in its solid state, manufactured without the desired texture of its surface(s).

In a particular embodiment, the green part is formed by injection molding of a feedstock, which is a homogeneous mixture of an injection powder (metal, ceramic, glass, carbide) with a binder. The injection powder may have a mean particle size generally varying in a range from about 100 µm to about 0.1 µm, and more particularly 50 µm to about 0.1 µm. In a particular embodiment, the percentage injection powder to total feedstock is in a range from 30 to 80% powder solids by volume of the total feedstock mixture, and preferably above 50% powder solids by volume of total feedstock mixture. In another embodiment, the green part includes two or more green parts molded separately and assembled while still in the green state, as described in application No. 12/408,078 filed March 20, 2009 and published as US 2010-0236688 A1, which is incorporated by reference herein.

In a particular embodiment, the injection powder is a metal, such as nickel superalloy. Alternate metals include, but are not limited to, steel based alloys, other nickel based alloys, cobalt based alloys, titanium, copper, and other types of superalloys.

In a particular embodiment, the binder includes a mix of thermoplastic polymers and is composed in majority of wax, and may include surfactants and other additives. The binder is typically an organic material which is molten above room temperature but solid or substantially solid (herein referred to as "solid") at room temperature. The binder may include various components such as lubricants and/or surfactants, and may include a mixture of a lower and a higher melting temperature polymer or polymers. Examples of binders include, but are not limited to, polypropylene (PP), polyethylene (PE), polystyrene (PS), polyvinyl Chloride (PVC), paraffin Wax 60 (PW), polyethylene glycol 65 (PEG), microcrystalline wax 70 (MW), and combinations thereof.

In a particular embodiment, the injection powder is mixed with the molten binder and the suspension of injection powder and binder is injected into a mold and cooled to a temperature below that of the melting point of the binder.

In an embodiment where the green part is composed of two or more green parts molded separately, allowed to cool and then assembled while in the green state, the green parts may be manufactured using different injections powders for individual green parts. Alternately, all green parts may be manufactured using the same injection powder. The green parts may be connected using permanent or non-permanent type connections, which may be substantially hermetic (substantially airtight or sealed) or not, and which may be formed by threaded engagement, through mechanical connectors made of feedstock or filler feedstock including but not limited to bolts, clips, clamps, couplings, lugs, pins and rivets, through the addition of a small amount of molten feedstock to the junction between the parts, through heating one or more of the parts near the junction to locally melt the binder, through heating one or more of the parts at the junction to locally soften the binder without melting it, by using a melted filler feedstock as a glue at the junction between the parts, etc. The filler feedstock may have a different binder than that used in the green part such as to have a lower melting point to be liquid or paste-like at a temperature where the green parts remain solid.

The physical state of the binder of the green part in its solidified state is changed in only a predetermined portion of each surface on which a texture is desired, as set forth in step 104. In an embodiment where the green part is composed of two or more green parts molded separately, this may be performed either before or after the two or more green parts are interconnected.

The configuration of the predetermined portion is selected in accordance with the desired surface texture in the final part. For example, for a texture such as that shown in Fig. 3, the predetermined portion may include two series of lines crossing each other in a perpendicular manner, with the lines of a same one of the series being parallel, in correspondence with the grooves 50, 52; for a textured pattern such as that shown in Figs. 4-5, the predetermined portion may include a set of parallel lines, in correspondence with the grooves 150; for a desired surface pattern including circular pins, the predetermined portion may include a plurality of spaced apart rings such that the pins will be defined at their center; etc. In a particular embodiment, the predetermined portion corresponds to a marking of the position of the indented features of the desired surface pattern.

Other possible configurations for the predetermined portion include lines or linear features having an orientation following the direction of the cooling air, including for example circular patterns on the surface 26 in alignment with impingement holes in the turbine case, such as to create cooling fins perpendicular to the direction of the flow of the cooling air. Other possible configurations include, but are not limited to, various types of hatch patterns and a rasterized arbitrary image created on the surface.

After the state of the binder has been changed in the predetermined portion, a texture may be visible on the surface of the green part; in a particular embodiment, this texture is different from that obtained in the finished part. For example, the size and/or shape of the elements forming the texture (e.g. depth of grooves, size and/or shape of pins) may vary between the green part and the finished part.

In a particular embodiment, changing the physical state of the binder in the predetermined portion includes melting and/or vaporizing the binder in the predetermined portion, while the remainder of the binder remains solid.

In a particular embodiment, the state of the binder in the predetermined portion is changed through local heating of only the predetermined portion at a temperature at least equal to the melting temperature of the binder. In a particular embodiment, the predetermined portion is heated at a temperature at least equal to the boiling temperature of the binder. In a particular embodiment, the local heating is performed at a temperature selected to avoid local sintering or chemical alteration of the injection (e.g. metal) powder. Alternately, some local sintering may occur.

The injection powder in the predetermined portion may be displaced, for example through the force of the reaction in the binder (e.g. explosive escape of volatile vapors created during vaporization of the binder), and/or as a consequence of the method used to provide heat to the binder (e.g. heated air as further detailed below). In a particular embodiment, the displacement of the injection powder in the predetermined portion contributes to the creation of the surface texture on the finished part.

The solid loading in the predetermined portion may be changed, for example through variations in the powder to binder ratio caused by the melting and/or evaporation of the binder in the predetermined portion. In a particular embodiment, the changed in solid loading in the predetermined portion contributes to the creation of the surface texture on the finished part.

The predetermined portion may be locally heated through radiation. In a particular embodiment, the predetermined portion is heated using a laser, for example a marking laser such a 20W ytterbium laser marking system. Other types of lasers may alternately be used. The parameters of the laser (e.g. power, frequency of pulses, focal point, wobble) are selected to produce local heating of the binder in the predetermined portion to at least its melting temperature, and preferably to a temperature lower than that producing sintering of the injection powder. In a particular embodiment, the laser is configured such as to be out of focus with the heated surface, to produce a more diffuse heating over a larger area. In a particular embodiment, the use of a laser allows for the creation of complex patterns in a comparatively short time.

Alternate methods of heating the predetermined portion include, but are not limited to, directing a small jet of heated air on the predetermined portion using a micro heat gun, where the jet of air is preferably configured to control the displacement of the injection powder caused thereby; and physical contact of a heated element (e.g. wire mesh element) with the predetermined portion, where the heated element is preferably configured to limit the amount of feedstock remaining stuck on the heated element when it is disengaged from the predetermined portion.

In a particular embodiment, changing the state of the binder includes mechanisms other than melting and vaporization, including for example decomposition, oxidation, combustion, and combinations thereof, which may occur together with melting and/or vaporization.

Once the state of the binder in the predetermined portion has been changed, debinding of the part is performed, as shown in step 106, transforming the green part into a brown part. A brown part as discussed herein refers to a porous and friable part that is usually defined by an almost complete absence of binder. The brown part may be held together by some pre-sintered injection powder particles linked through a weak interaction between spaces formed at points where the binder was originally found, and/or by a residual amount of binder remaining after the debinding process. Debinding is typically done by heating, dissolution with a solvent, or decomposition.

In a particular embodiment, the debinding process is performed by heating the green part supported by a particulate shape retaining media to minimize deformation; the particulate media is easily wetted by the binder in order to allow for wicking of the binder to take place. In a particular embodiment, the particulate media is alumina (Al₂O₃). Alternately, other particulate shape retaining media may also be used, including but not limited to CaO, MgO, zeolites, bentonite, clays, other metal oxides (TiO₂, ZrO₂), SiO₂, and combinations thereof.

As the green part is heated, the binder melts and becomes liquid, and the particulate shape retaining media wicks the molten liquid binder away from the green part within itself. In a particular embodiment, the ramp rate for the temperature is selected such as to avoid immediate vaporization of the binder to limit deformation of the part which could be caused by explosive escape of volatile vapors therefrom. The temperatures and ramp rates depend on the binder used. When the majority of the binder is removed as a liquid, the remaining binder may be heated at a faster rate for partial or full vaporization.

The brown part is then heated to be sintered, as shown in step 108, to obtain the final part with its surface texture. In a particular embodiment, the sintering process includes heating the brown part to a temperature below the melting point of the injection powder (e.g. metal powder), and preferably above one half the melting point in degrees Kelvin. Heating may be performed with one or more dwell(s), and in a particular embodiment is performed with the part being free of the particulate media.

The final surface texture of the part is created during the debinding and/or sintering process from the predetermined portions, for example due to the injection powder displaced during the change of state of the binder in the predetermined portion of the green part and/or the variation of solid loading present in the predetermined portion as compared to that in the remainder of the part.

The above description is meant to be exemplary only, and one skilled in the art will recognize that changes may be made to the embodiments described without departing from the scope of the invention disclosed. Modifications which fall within the scope of the present invention will be apparent to those skilled in the art, in light of a review of this disclosure, and such modifications are intended to fall within the appended claims.

## Claims

1. A method of creating a texture (40) on at least one surface (26) of a part (20), the method comprising:
a) providing a solid green part made from a feedstock including powder and a binder;
b) after step a), changing a physical state of the binder in only a predetermined portion of each of the at least one surface (26) of the part (20); and
c) after step b), defining the texture (40) from the predetermined portion by debinding and sintering the part (20).

2. The method as defined in claim 1, wherein providing the solid green part includes molding the part from a feedstock including the powder and the binder and solidifying the molded part, the powder remaining solid during molding.

3. The method as defined in claim 1 or 2, wherein the powder is a metal powder.

4. The method as defined in any one of the preceding claims, wherein step b) includes locally heating only the predetermined portion.

5. The method as defined in claim 4, wherein step b) includes locally heating only the predetermined portion using a laser.

6. The method as defined in claim 5, wherein the laser is configured such as to be out of focus with the at least one surface (26) during the local heating thereof.

7. The method as defined in any one of the preceding claims, wherein step b) includes melting the binder in only the predetermined portion.

8. The method as defined in any one of the preceding claims, wherein step b) includes vaporizing the binder in only the predetermined portion.

9. The method as defined in any one of the preceding claims, wherein step b) includes avoiding local sintering or chemical alteration of the powder.

10. The method as defined in any one of the preceding claims, wherein step b) includes displacing the powder in the predetermined portion.

11. The method as defined in any one of the preceding claims, wherein step c) includes creating the texture with a solid loading in the predetermined portion differing from that in a remainder of the part.

12. The method as defined in any one of the preceding claims, wherein the binder is a mix of thermoplastic polymers.

13. The method as defined in any one of the preceding claims, wherein the predetermined portion of each of the at least one surface (26) defines a pattern of regularly spaced apart indentations (50,52; 150) on the surface (26).

14. The method as defined in any one of the preceding claims, wherein the powder is a metal powder and melting or vaporizing the binder is performed by heating the predetermined portion to a temperature lower than a temperature causing local sintering or chemical alteration of the metal powder.

15. The method as defined in any one of the preceding claims, wherein step b) causes a change in solid loading in the predetermined portion.
